# EUROPEAN PATENT SPECIFICATION

(11) **EP 3 944 061 B1**
(45) Date of publication and mention of the grant of the patent: **24.12.2025**
(21) Application number: 21187471.4
(22) Date of filing: 23.07.2021
(51) Int. Cl.: G06F 3/0354

(54) **ELECTROMAGNETIC STYLUS**
ELEKTROMAGNETISCHER STIFT
STYLET ÉLECTROMAGNÉTIQUE

(30) Priority: 23.07.2020 CN 202021464852 U
(43) Date of publication of application: 26.01.2022
(73) Proprietor: Shenzhen Huion Animation Technology Co., Ltd., Shenzhen 518103 (CN)
(72) Inventor: Luo, Yong, Shenzhen 518103 (CN)
(74) Representative: Winter, Brandl - Partnerschaft mbB

(56) References cited:
- WO-A1-2020/056834
- KR-A- 20190 054 832
- US-A1- 2017 108 953

## Description

### FIELD OF THE PRESENT DISCLOSURE

The present disclosure relates to computer peripheral technical field, and in particular to a digital electromagnetic stylus.

### DESCRIPTION OF RELATED ART

With the advance of science and technology, digitalized electronic information equipment has a function of track input, and the realization of the function usually adopts the handwriting inputs mode. Electromagnetic styluses as digital electronic information devices are widely used, and the styluses can not only input characters by handwriting, but also realize drawing, point control operation and so on.

In current correlation technique and actual production, because of the electromagnetic stylus machining error and unadjustable pressure value, when using electromagnetic stylus, the person of writing need to press the refill a little in order to make the stylus more sensitive to capture the writing track, or need more strength to make the handwriting stylus sense the writing track, which lead to writing unsmooth and feel worse.

Therefore, it is desired to provide an electromagnetic stylus to address the above problem.

Document KR 2019 0054832 A relates to an electronic pen including the features of the preamble of claim 1. Document US 2017/108953 A1 relates to a capacitive stylus including a pen tube, an upper skeleton structure, a lower skeleton structure, a pen cover, a refill, are fill holder, a trigger element, a spring, a control circuit board, a pressure sensing element and an adjusting element. Document WO 2020/056834 A1 relates to a passive electromagnetic fountain pen comprising a refill and a pen body, wherein the pen body comprises a first iron core and an iron core cabin. A refill clamp connecting rod, a second iron core, a third iron core, an elastic component, a pressure regulating plate and a first structure fitted with the pressure regulating plate are arranged in sequence from the front to the rear of the iron core cabin.

### SUMMARY

An electromagnetic stylus is provided in the embodiments of the present disclosure. The invention is set out in the appended set of claims.

### BRIEF DESCRIPTION OF THE DRAWINGS

In order to more clearly illustrate the technical solutions of the present disclosure, the drawings used in the description are briefly introduced below, and it is obvious that the drawings in the following description are only some embodiments of the present disclosure, and for technical personnel in the field, other drawings can be obtained without creative work, wherein:
FIG. 1 is an overall structural sectional view of an electromagnetic stylus according to a first embodiment of the present disclosure;
FIG. 2 is an enlarged schematic view of area II of the electromagnetic stylus shown in FIG. 1;
FIG. 3 is an structure decomposition view of the electromagnetic stylus of FIG. 1;
FIG. 4 is a schematic perspective view of the first regulating member of FIG. 3;
FIG. 5 is a schematic cross-sectional view of the first regulating member of FIG. 3;
FIG. 6 is a schematic perspective view of the silica gel pad shown in FIG. 2;
FIG. 7 is a schematic perspective view of the eject rod shown in FIG. 2;
FIG. 8 is a schematic perspective view of the eject rod of FIG. 7 at another angle;
FIG. 9 is the overall structure section of the electromagnetic stylus shown in the second embodiment of the present disclosure;
FIG. 10 is an enlarged schematic view of the X region of the electromagnetic stylus in FIG. 9; and
FIG. 11 is an exploded view of the electromagnetic stylus shown in FIG. 9.

### DETAILED DESCRIPTION OF THE EXEMPLARY EMBODIMENTS

The technical solutions according to the embodiments of the present disclosure are described in detail clearly and completely hereinafter with reference to the accompanying drawings for the embodiments of the present disclosure. Apparently, the described embodiments are only a portion of embodiments of the present disclosure, but not all the embodiments of the present disclosure. Based on the embodiments of the present disclosure, all other embodiments derived by persons of ordinary skill in the art without any creative efforts shall fall within the protection scope of the present disclosure.

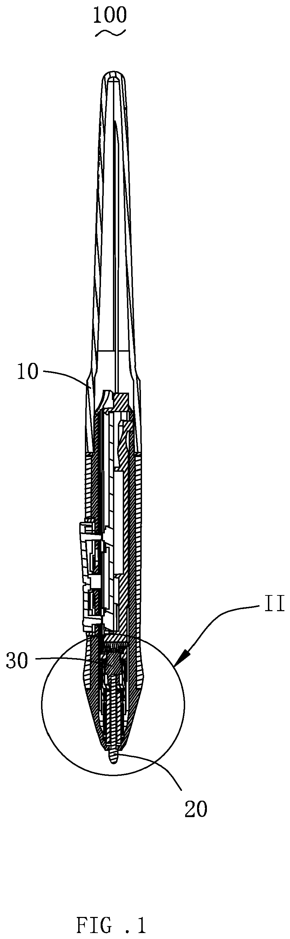

Referring to FIG. 1 to FIG. 3, FIG. 1 is an overall structural sectional view of an electromagnetic stylus according to a first embodiment of the present disclosure,

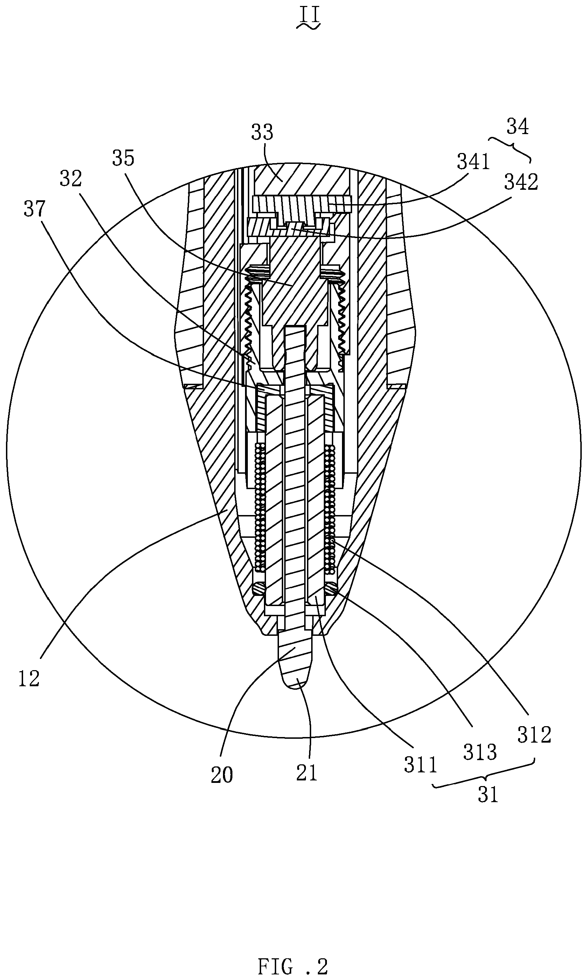

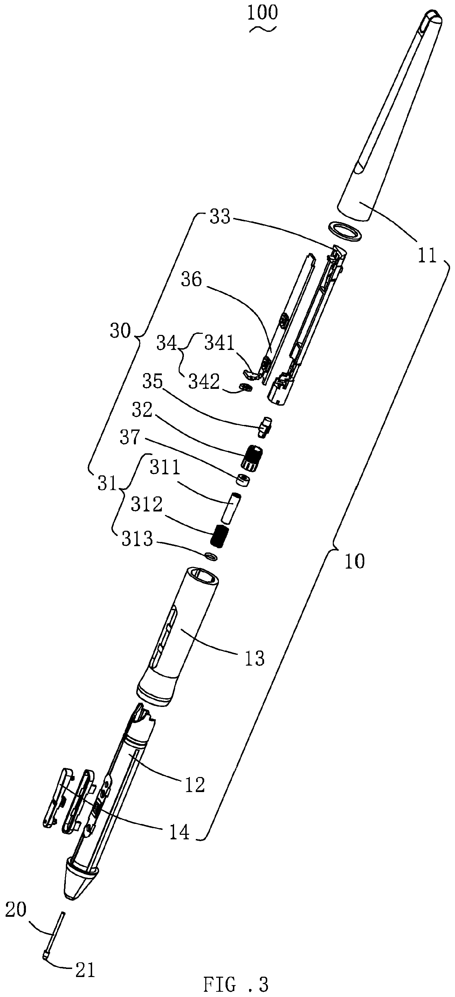

FIG. 2 is an enlarged schematic view of area II of the electromagnetic stylus shown in FIG. 1, and FIG. 3 is an structure decomposition view of the electromagnetic stylus of FIG. 1. The electromagnetic stylus 100 comprises a housing 10, a refill 20, and an electromagnetic inductor 30 arranged in the housing 10.

The housing 10 comprises an upper housing 11 and a lower housing 12 that are in cooperation with each other, a silica gel jacket 13 sleeved on the lower housing 12, and a key 14 arranged on a surface of the lower housing 12.

The electromagnetic inductor 30 is configured to fix the refill 20 and sense a writing trajectory of the refill 20. The electromagnetic inductor 30 comprises a magnetic core component 31, a first regulating member 32, a second regulating member 33, a force sensing component 34, an ejector rod 35, and a resonator circuit board 36. The force sensing component 34 is proximal to an end portion of the refill 20, the refill 20 runs through the first regulating member 32, and the second regulating member 33 and the first regulating member 32 are adjustable relative to each other.

The magnetic core component 31 comprises a magnetic core 311, a coil 312 wound on the magnetic core 311, and an O-ring 313 sleeved on an end, proximal to the refill 20, of the magnetic core 311. The magnetic core 311 is a hollow magnetic core which allows the refill 20 to run through. The O-ring 313 is made of silicone material, and is preferably a silica ring. The refill 20 sequentially runs through the O-ring 313 and the magnetic core 311. The O-ring 313 is configured to protect the magnetic core 311 and to achieve an anti-shock effect.

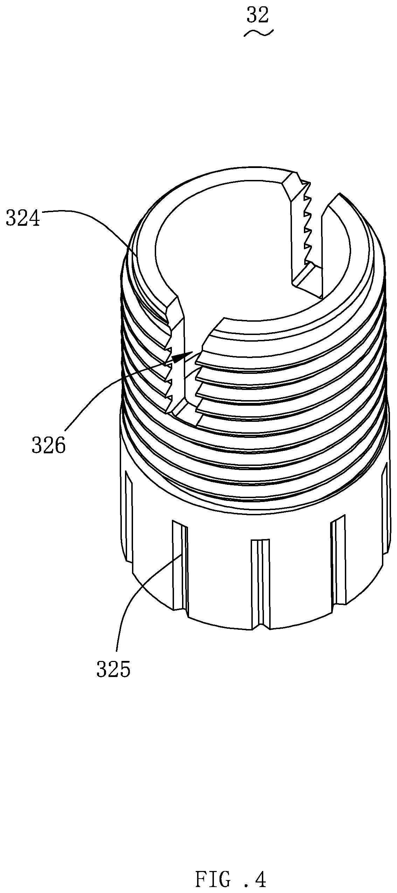

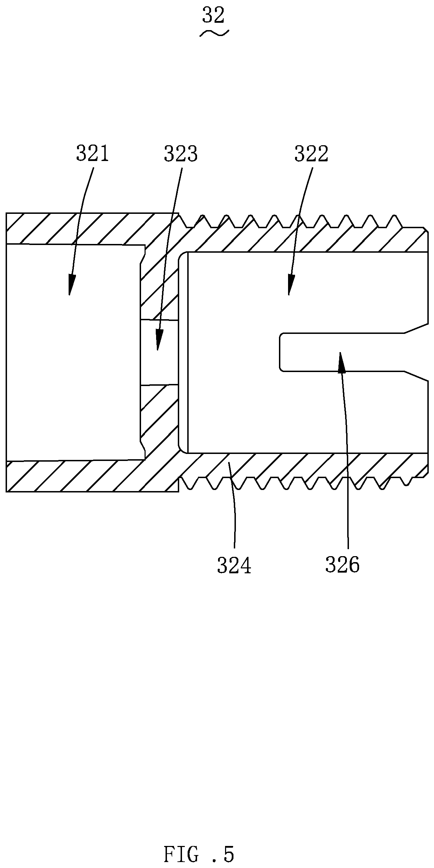

Referring to FIG. 4 and FIG. 5, FIG. 4 is a schematic perspective view of the first regulating member display in FIG. 3, and FIG. 5 is a schematic sectional view of the first regulating member display in FIG. 3. In this embodiment, the first regulating member 32 is a cartridge; the first regulating member comprises a first receiving slot 321 proximal to a tip 21 of the refill 20, a second receiving slot 322 distal from the tip 21 of the refill 20, and a first through hole 323 configured to communicate the first receiving slot 321 with the second receiving slot 322. The magnetic core component 31 is received in the first receiving slot 321, the ejector rod 35 is received in the second receiving slot 322, and the refill 20 runs through the first through hole 323, and is abutted against one bottom of the ejector rod 35. A relative position is adjusted between the first regulating member 32 and the second regulating member 33 by threaded engagement, such that a force between the force sensing component 34 and the end portion of the refill 20 is synchronously adjustable with adjustment of the relative position between the first regulating member 32 and the second regulating member 33. Therefore, a male threaded structure 324 is arranged on an end, proximal to the second regulating member 33, of the first regulating member 32, and a female threaded structure engageable with the male threaded structure 324 is arranged on the second regulating member 33. In addition, the first regulating member 32 may be threadedly engaged with the second regulating member 33 in other fashions. For example, the female threaded structure is arranged on an end, distal from the tip 21, of the first regulating member 32, and the male threaded structure engageable with the female threaded structure is arranged on the second regulating member 33. It should be noted that the first regulating member 32 may be further arranged on the lower housing 12.

Further, an anti-skid portion 325 is arranged on a surface, proximal to the tip 21, of the first regulating member 32, and a first straight slot 326 fitted to the ejector rod 35 is arranged on an end distal from the refill 20. Furthermore, the first regulating member 32 further comprises an alignment rib arranged on an outer surface of the first regulating member. The anti-skid portion 325 facilitates manufacturing, and the alignment rib facilitates force adjustment for the electromagnetic stylus 100.

The electromagnetic stylus 100 further includes a cartridge silica gel 37 arranged between the magnetic core component 31 and the first regulating member 32, wherein the cartridge silica gel 37 is received in the first receiving slot 321. The cartridge silica gel 37 is provided with a through hole which allows the refill 20 to run through, such that the refill 20 sequentially runs through the cartridge silica gel 37 and the cartridge 32. The cartridge silica gel 37 is configured to protect the magnetic core component 31, and is tightly engaged with the magnetic core component 31 for ease of assembling.

In this embodiment, the second regulating member 33 is a fixing frame, and the force sensing component 34 is fixed on the fixing frame. The resonator circuit board 36 is fixed to the fixing frame. For engagement-based adjustment between the first regulating member 32 and the second regulating member 33, the second regulating member 33 further includes a female threaded structure or a male threaded structure 324 arranged on an end proximal to the first regulating member 32. The second regulating member 33 is snapped into the upper housing 11, and the force sensing component 34 is fixed to a side, proximal to the first regulating member 32, of the resonator circuit board 36.

The force sensing component 34 includes a force sensing substrate 341 and a silica gel pad 342. The force sensing substrate 341 is fixedly arranged on the substrate, and is coaxially arranged with the refill 20, the magnetic core 311, and the first regulating member 32. A capacitive sensor is soldered to the force sensing substrate 341, which facilitates assembling.

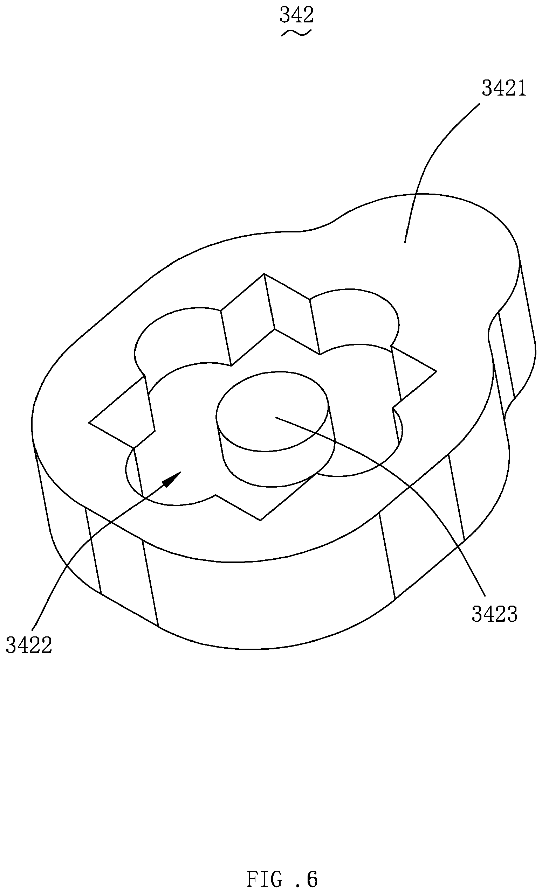

Referring to FIG. 6, FIG. 6 is a schematic perspective view of a silica gel pad. The silica gel pad 342 is arranged on a side, proximal to the refill 20, of the force sensing substrate 341. Further, the silica gel pad 342 includes a protrusion 3421 for foolproofing, a recess 3422 recessed at the periphery, and a protrusive abutting portion 3423 positioned in a central portion thereof. The silica gel pad 342 is configured to control writing force feeling, and is partially sleeved to the force sensing substrate 341 for protecting the force sensing substrate 341.

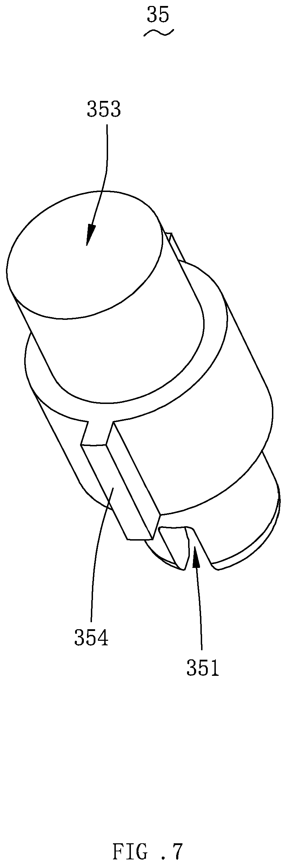

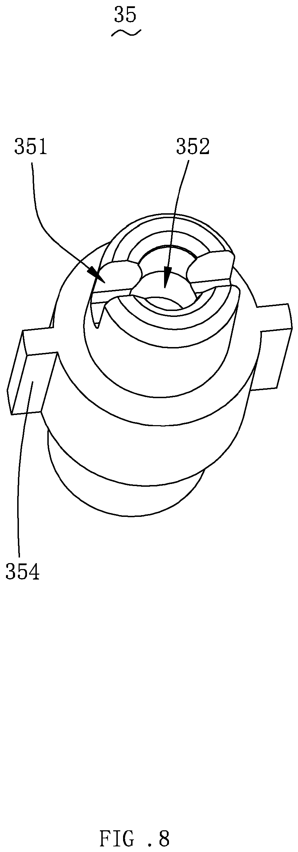

Referring to FIG. 7 and FIG. 8, FIG. 7 is a schematic perspective view of an the eject rod, and FIG. 8 is a schematic perspective view of the eject rod of FIG. 7 at another angle. The electromagnetic stylus 100 may further include the ejector rod 35 arranged between the first regulating member 32 and the second regulating member 33. The ejector rod 35 is at least partially received in the first regulating member 32. Specifically, the ejector rod 35 is partially received in the second receiving slot 322. A second straight slot 351 and a blind hole 352 are arranged on an end, proximal to the refill 20, of the ejector rod 35. An end, distal from the refill 20, of the ejector rod 35 is a smooth end surface 353. The refill 20 runs through the blind hole 342 and is abutted against the ejector rod 35. Further, a pillar protrusion 354 is arranged on each of two sides of the ejector rod 35, and is configured to be fitted to the first straight slot 326. The second straight slot 351 is configured to generate deformation abdication in scenarios of insertion or replacement of the refill 20, such that a proper force is present during insertion or replacement of the refill 20. A pillar protrusion 354 and the first regulating member 32 are assembled to prevent the ejector rod 35 from shocking, an end face of the force sensing component 34 is aligned and in consistent contact with the ejector rod 35, and the smooth end surface 353 acts on the silica gel pad 342.

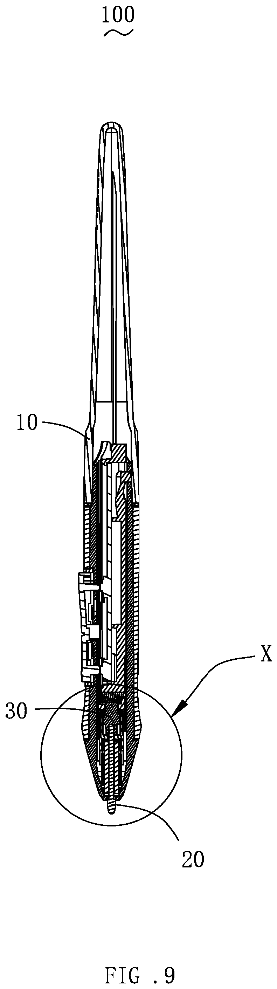

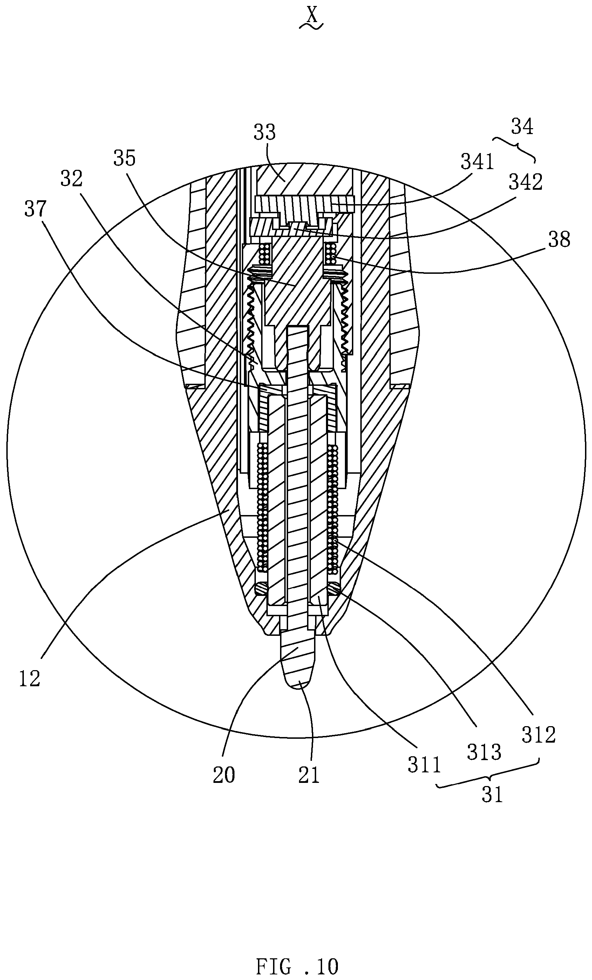

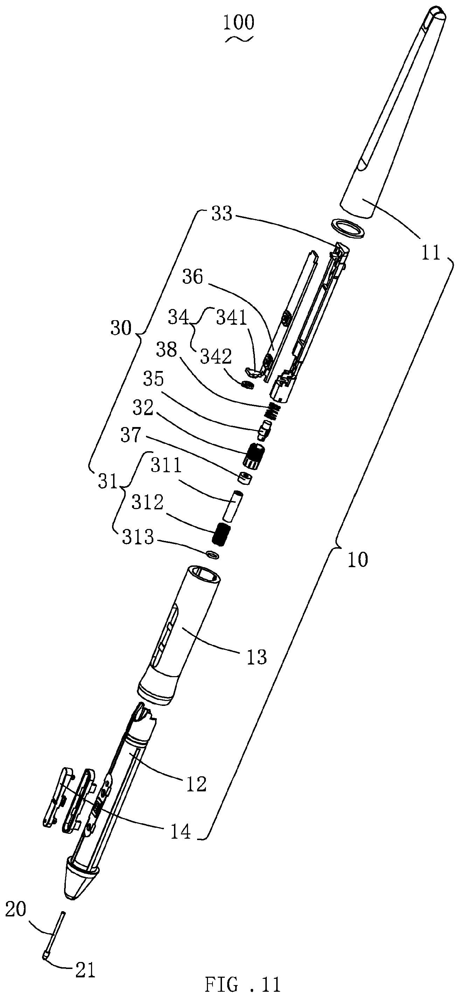

Referring to FIG. 9 to FIG. 11, FIG. 9 is the overall structure section of the electromagnetic stylus shown in the second embodiment of the present disclosure, FIG. 10 is an enlarged schematic view of the X region of the electromagnetic styles in FIG. 9, and FIG. 11 is an exploded view of the electromagnetic stylus shown in FIG. 9.. The present disclosure provides another embodiment of the electromagnetic stylus. Compared with the first embodiment, the electromagnetic stylus 100 according to the second embodiment may further include a spring 38 arranged between the second regulating member 33 and the ejector rod 35, and other structures are the same as those in the first embodiment, which are not detailed herein. Specifically, the spring 38 is sleeved on an end, proximal to the silica gel pad 342, of the ejector rod 35; with the spring 38 added, the ejector rod 35 and the force sensing component 34 are constantly abutted against each other. This prevents an idle stroke during the writing, such that sensitivity of the electromagnetic stylus 100 becomes higher, and writing feeling of a user is better.

Compared with the related art, the electromagnetic stylus 100 according to the present disclosure is configured with the first regulating member 32 and the second regulating member 33 that are adjustable relative to each other. In addition, the refill 20 runs through the first regulating member 32, the force sensing component 34 is fixed to the second regulating member 33, by the threaded engagement between the first regulating member 32 and the second regulating member 33 along a direction of the refill, and force adjustment of the refill 20 relative to the force sensing component 34 is driven, such that the force is conveniently regulated, and manufacturing is eased. When the refill 20 is subject to a force, the force is instantly conducted to the force sensing substrate 341 via the first regulating member 32, the ejector rod 35, and the silica gel pad 342. This enhances electromagnetic writing performance. The second straight slot 351 of the ejector rod 35 generates deformation abdication in scenarios of insertion or replacement of the refill 20. The pillar protrusion 354 is fitted to the first straight slot 326 to prevent the ejector rod 35 from shocking, and maintain smooth and consistent writing of the electromagnetic stylus 100.

For further improvements of the present disclosure, the first regulating member 32 and the second regulating member 33 are not limited to isolated arrangement. In addition, the second regulating member 33 and the upper housing 11 may be fixed together, and the first regulating member 32 and the lower housing 12 may be fixed together. Specifically, the fixing frame of the second regulating member 33 and the upper housing 11 are fixed together, and the cartridge of the first regulating member 32 and the lower housing 12 are fixed together.

Further, the first regulating member 32 and the lower housing 12 are designed to an integral structure, and the second regulating member 33 and the upper housing 11 are designed to an integral structure. Any structures capable of adjusting the force between the force sensing component 34 and the refill 20 all fall within the inventive concept of the present disclosure.

It is to be understood, however, that even though numerous characteristics and advantages of the present exemplary embodiments have been set forth in the foregoing description, together with details of the structures and functions of the embodiments, the disclosure is illustrative only, and changes may be made in detail, especially in matters of shape, size, and arrangement of parts within the principles of the invention to the full extent indicated by the broad general meaning of the terms where the appended claims are expressed.

## Claims

1. An electromagnetic stylus (100), comprising:
a housing (10);
a refill (20); and
an electromagnetic inductor (30) arranged in the housing (10), wherein the electromagnetic inductor (30) of the electromagnetic stylus (100) comprises:
a force sensing component (34), one end of the force sensing component (34) being proximal to an end portion of the refill (20); and
a first regulating member (32), the refill (20) running through the first regulating member (32);
a second regulating member (33), the second regulating member (33) and the first regulating member (32) being adjustable relative to each other;
an ejector rod (35) arranged between the first regulating member (32) and the second regulating member (33), the ejector rod (35) being received in the first regulating member (32),
wherein the force sensing component (34) is fixed to the second regulating member (33), and is synchronously movable with the second regulating member (33), and a force between the force sensing component (34) and the end portion of the refill (20) is synchronously adjustable with adjustment of a relative position between the first regulating member (32) and the second regulating member (33),
**characterized in that**
the first regulating member (32) comprises a first straight slot (326) arranged on an end, proximal to the ejector rod (35), of the first regulating member (32), and a pillar protrusion (354) is arranged on each of two sides of the ejector rod (35), the pillar protrusion (354) being configured to be fitted to the first straight slot (326); and a second straight slot (351) and a blind hole (352) are arranged on an end, proximal to the refill (20), of the ejector rod (35), and an end, distal from the refill (20), of the ejector rod (35) is a smooth end surface, the refill (20) being inserted into the blind hole (352).

2. The electromagnetic stylus (100) according to claim 1, wherein the adjustment of the relative position is achieved between the first regulating member (32) and the second regulating member (33) by threaded engagement.

3. The electromagnetic stylus (100) according to claim 2, wherein a male threaded structure (324) is arranged on an end, distal from a tip of the refill (20), of the first regulating member (32), and a female threaded structure engageable with the male threaded structure (324) is arranged on the second regulating member (33); or a female threaded structure is arranged on an end, distal from a tip of the refill (20), of the first regulating member (32), and a male threaded structure engageable with the female threaded structure is arranged on the second regulating member (33).

4. The electromagnetic stylus (100) according to claim 1, wherein the first regulating member (32) comprises a cartridge, the cartridge comprising a first receiving slot (321) proximal to a tip of the refill (20), a second receiving slot (322) distal from the tip of the refill (20), and a first through hole (323) configured to communicate the first receiving slot (321) with the second receiving slot (322), the refill (20) running through the first through hole (323).

5. The electromagnetic stylus (100) according to claim 4, wherein an anti-skid portion (325) is arranged on a surface, proximal to the tip of the refill (20), of the cartridge.

6. The electromagnetic stylus (100) according to claim 4, wherein the cartridge further comprises an alignment rib arranged on an outer surface of the cartridge.

7. The electromagnetic stylus (100) according to claim 1, wherein the second regulating member (33) comprises a fixing frame, the force sensing component (34) being fixed to the fixing frame.

8. The electromagnetic stylus (100) according to claim 1, wherein the force sensing component (34) comprises a force sensing substrate (341) and a silica gel pad (342), the silica gel pad (342) being abutted against a side, proximal to the refill (20), of the force sensing substrate (341).

## Patentansprüche

1. Elektromagnetischer Stift (100) mit
einem Gehäuse (10);
einem Nachfüllteil (20); und
einem elektromagnetischen Induktor (30), der in dem Gehäuse (10) angeordnet ist, wobei der elektromagnetische Induktor (30) des elektromagnetischen Stifts (100) Folgendes aufweist:
eine Kraftmesskomponente (34), wobei ein Ende der Kraftmesskomponente (34) nahe einem Endabschnitt des Nachfüllteils (20) angeordnet ist;
ein erstes Regelungselement (32), wobei das Nachfüllteil (20) durch das erste Regelungselement (32) verläuft;
ein zweites Regelungselement (33), wobei das zweite Regelungselement (33) und das erste Regelungselement (32) relativ zueinander einstellbar sind; und
eine Auswerferstange (35), die zwischen dem ersten Regelungselement (32) und dem zweiten Regelungselement (33) angeordnet ist, wobei die Auswerferstange (35) in dem ersten Regelungselement (32) aufgenommen ist,
wobei die Kraftmesskomponente (34) an dem zweiten Regelungselement (33) befestigt ist und mit dem zweiten Regelungselement (33) synchron bewegbar ist, und eine Kraft zwischen der Kraftmesskomponente (34) und dem Endabschnitt des Nachfüllteils (20) mit einer Einstellung einer relativen Position zwischen dem ersten Regelungselement (32) und dem zweiten Regelungselement (33) synchron einstellbar ist,
**dadurch gekennzeichnet, dass**
das erste Regelungselement (32) einen ersten geraden Schlitz (326) aufweist, der an einem der Auswerferstange (35) nahegelegenen Ende des ersten Regelungselements (32) angeordnet ist (35), wobei ein Säulenvorsprung (354) an jeder der beiden Seiten der Auswerferstange (35) angeordnet ist, wobei der Säulenvorsprung (354) dazu eingerichtet ist, in den ersten geraden Schlitz (326) einzupassen; wobei ein zweiter gerader Schlitz (351) und ein Sackloch (352) an einem dem Nachfüllteil (20) nahegelegenen Ende der Auswerferstange (35) angeordnet sind und ein vom Nachfüllteil (20) entferntes Ende der Auswerferstange (35) als glatte Endfläche ausgebildet ist, wobei das Nachfüllteil (20) im Sackloch (352) eingesetzt ist.

2. Elektromagnetischer Stift (100) nach Anspruch 1, wobei die Einstellung der relativen Position zwischen dem ersten Regelungselement (32) und dem zweiten Regelungselement (33) durch Gewindeeingriff erfolgt.

3. Elektromagnetischer Stift (100) nach Anspruch 2, wobei eine Außengewindestruktur (324) an einem von einer Spitze des Nachfüllteils (20) entfernten Ende des ersten Regelungselements (32) angeordnet ist, und eine mit der Außengewindestruktur (324) eingreifbare Innengewindestruktur an dem zweiten Regelungselement (33) angeordnet ist, oder eine Innengewindestruktur an einem von einer Spitze des Nachfüllteils (20) entfernten Ende des ersten Regelungselements (32) angeordnet ist, und eine mit der Innengewindestruktur eingreifbare Außengewindestruktur an dem zweiten Regelungselement (33) angeordnet ist.

4. Elektromagnetischer Stift (100) nach Anspruch 1, wobei das erste Regelungselement (32) eine Kartusche aufweist, wobei die Kartusche einen ersten Aufnahmeschlitz (321), der nahe einer Spitze des Nachfüllteils (20) angeordnet ist, einen zweiten Aufnahmeschlitz (322), der von der Spitze des Nachfüllteils (20) entfernt angeordnet ist, und ein erstes Durchgangsloch (323), das dazu eingerichtet ist, den ersten Aufnahmeschlitz (321) mit dem zweiten Aufnahmeschlitz (322) zu verbinden, aufweist, wobei das Nachfüllteil (20) durch das erste Durchgangsloch (323) verläuft.

5. Elektromagnetischer Stift (100) nach Anspruch 4, wobei ein Anti-Rutsch-Teil (325) auf einer der Spitze des Nachfüllteils (20) nahegelegenen Oberfläche der Kartusche angeordnet ist.

6. Elektromagnetischer Stift (100) nach Anspruch 4, wobei die Kartusche ferner eine Ausrichtungsrippe aufweist, die auf einer Außenfläche der Kartusche angeordnet ist.

7. Elektromagnetischer Stift (100) nach Anspruch 1, wobei das zweite Regelungselement (33) einen Befestigungsrahmen aufweist, wobei die Kraftmesskomponente (34) an dem Befestigungsrahmen befestigt ist.

8. Elektromagnetischer Stift (100) nach Anspruch 1, wobei die Kraftmesskomponente (34) ein Kraftmesssubstrat (341) und ein Kieselgel-Pad (342) aufweist, wobei das Kieselgel-Pad (342) an einer dem Nachfüllteil (20) nahegelegenen Seite des Kraftmesssubstrats (341) anliegt.

## Revendications

1. Stylet électronique (100) comprenant :
un boîtier (10) ;
une recharge (20) ; et
un inducteur électromagnétique (30) disposé dans le boîtier (10), dans lequel l'inducteur électromagnétique (30) du stylet électromagnétique (100) comprend :
un composant de détection de force (34), une extrémité du composant de détection de force (34) étant proximale à une partie d'extrémité de la recharge (20) ; et
un premier élément de régulation (32), la recharge (20) traversant le premier élément de régulation (32) ;
un second élément de régulation (33), le second élément de régulation (33) et le premier élément de régulation (32) étant réglables l'un par rapport à l'autre ;
une tige d'éjection (35) disposée entre le premier élément de régulation (32) et le second élément de régulation (33), la tige d'éjection (35) étant reçue dans le premier élément de régulation (32),
dans lequel le composant de détection de force (34) est fixé au second élément de régulation (33) et est mobile de manière synchrone avec le second élément de régulation (33), et une force entre le composant de détection de force (34) et la partie d'extrémité de la recharge (20) est réglable de manière synchrone avec le réglage d'une position relative entre le premier élément de régulation (32) et le second élément de régulation (33),
**caractérisé en ce que**
le premier élément de régulation (32) comprend une première fente droite (326) agencée sur une extrémité, proximale à la tige d'éjection (35), du premier élément de régulation (32), et une saillie de pilier (354) est agencée sur chacun des deux côtés de la tige d'éjection (35), la saillie de pilier (354) étant configurée pour être ajustée à la première fente droite (326) ; et une seconde fente droite (351) et un trou borgne (352) sont agencés sur une extrémité, proximale à la recharge (20), de la tige d'éjection (35), et une extrémité, distale de la recharge (20), de la tige d'éjection (35) est une surface d'extrémité lisse, la recharge (20) étant insérée dans le trou borgne (352).

2. Stylet électromagnétique (100) selon la revendication 1, dans lequel le réglage de la position relative est obtenu entre le premier élément de régulation (32) et le second élément de régulation (33) par engagement fileté.

3. Stylet électromagnétique (100) selon la revendication 2, dans lequel une structure filetée mâle (324) est disposée sur une extrémité, distale d'une pointe de la recharge (20), du premier élément de régulation (32), et une structure filetée femelle pouvant s'engager avec la structure filetée mâle (324) est disposée sur le second élément de régulation (33) ; ou une structure filetée femelle est disposée sur une extrémité, distale d'une pointe de la recharge (20), du premier élément de régulation (32), et une structure filetée mâle pouvant s'engager avec la structure filetée femelle est disposée sur le second élément de régulation (33).

4. Stylet électromagnétique (100) selon la revendication 1, dans lequel le premier élément de régulation (32) comprend une cartouche, la cartouche comprenant une première fente de réception (321) proximale à une pointe de la recharge (20), une seconde fente de réception (322) distale de la pointe de la recharge (20), et un premier trou traversant (323) configuré pour faire communiquer la première fente de réception (321) avec la seconde fente de réception (322), la recharge (20) traversant le premier trou traversant (323).

5. Stylet électromagnétique (100) selon la revendication 4, dans lequel une partie antidérapante (325) est disposée sur une surface, proximale à la pointe de la recharge (20), de la cartouche.

6. Stylet électromagnétique (100) selon la revendication 4, dans lequel la cartouche comprend en outre une nervure d'alignement disposée sur une surface extérieure de la cartouche.

7. Stylet électromagnétique (100) selon la revendication 1, dans lequel le second élément de régulation (33) comprend un cadre de fixation, le composant de détection de force (34) étant fixé au cadre de fixation.

8. Stylet électromagnétique (100) selon la revendication 1, dans lequel le composant de détection de force (34) comprend un substrat de détection de force (341) et un tampon de gel de silice (342), le tampon de gel de silice (342) étant en butée contre un côté, proximal à la recharge (20), du substrat de détection de force (341).
